# EUROPEAN PATENT SPECIFICATION

(11) **EP 1 204 529 B1**
(45) Date of publication and mention of the grant of the patent: **29.05.2013**
(21) Application number: 00954150.9
(22) Date of filing: 20.06.2000
(51) Int. Cl.: B29C 70/52, B29C 70/08

(54) **REINFORCEMENT MAT AND PULTRUDED PART**
VERSTÄRKUNGSMATTE UND PULTRUDIERTES FORMTEIL
MAT DE RENFORCEMENT ET PIECE PULTRUDEE

(30) Priority: 21.06.1999 US 155258 P
(43) Date of publication of application: 15.05.2002
(73) Proprietor: Pella Corporation, Pella, IA 50219 (US)
(72) Inventor: BEER, Kenneth, D., Vandergrift, PA 15690 (US); DAVIES, Laurence, W., Winnipeg R2G 2Y3 (CA); FRITZ, Peter, J., Pella, IA 50219 (US)
(74) Representative: Vossius & Partner
(86) International application number: PCT/US2000/040246
(87) International publication number: WO 2000/078529

(56) References cited:
- EP-A- 0 434 846
- WO-A-98/53978
- US-A- 4 752 513
- US-A- 5 055 242
- US-A- 5 908 689
- US-A- 5 910 458

## Description

### Background of the Invention

### 1. Field of the Invention

This invention relates to a a pultruded part and a mat for use as reinforcement for the resin composition used in pultrusion of the part. In particular, the invention concerns an improved reinforcement mat made up of a number of layers, including a layer having fibers which extend transversely of the mat, fibers that are oriented longitudinally of the mat, fibers that are arranged obliquely of the longitudinal and transverse fibers, entangling fibers that extend into the other fiber layers, and a binding resin for the fibers.

The invention is especially useful for pultrusion of parts for fenestration products and relates to a reinforcement mat for the pultrusion resin. Representative fenestration products in this respect include items such as pultruded window jambs, sills, heads, sash stiles or sash rails.

### 2. Description of the Prior Art

Pultrusion is a known technique in which longitudinally continuous fibrous elements, which can include roving and/or a mat, are combined into a structure. The process generally involves the pulling of the rovings and mats through a resin bath, and into a heated forming die. The heat of the die cures the resin, and the part is pulled through the die, on a continuous basis. The mat and roving are textile-type products, as they are flexible and conformable. Current pultruded parts are generally 1/4" or thinner and in the fenestration industry, range from 0.07" - 0.1" thick. The pultruded parts are solid structures, and generally have a profile such as a box, or open section, where the bends in the thin-profile give the pultrusion a high-degree of rigidity and structural integrity.

Mat and roving composite reinforcements are primarily glass products, while the resin matrix is usually, but not necessarily, a thermosetting polyester. Mat material is generally in the form of a non-woven mat, where glass fibers are randomly placed in a planar swirl pattern, resulting in a felt-like web.

Before pultrusion, glass rovings are groupings of up to thousands of microns-diameter glass fibers, that mechanically behave like flexible rope, because the diameter of each filament is so small, even though it is made of glass, commonly considered to be a rigid material. After pultrusion, the glass rovings are held together by the matrix resin, resulting in the rigidity of the pultrusion composite parts. In a pultrusion profile, the mat and roving constitute the reinforcement, while the resin constitutes the matrix of the solid composite.

The technique of pultrusion has been used for many years for manufacturing various parts including simple parts such as rods and more recently including parts of more complex and thinner cross-section. One requirement for thinner parts is that of providing fibers in the construction which are transverse to the length of the part to provide transverse strength.

The longitudinal strength of pultruded parts is very high since the majority of the fibers extend longitudinally in the form of a series of longitudinally extending rovings pulled through the die. However the transverse strength of pultruded parts is generally compromised because only a limited number of the fibers extend transversely.

Mats having transverse fibers and placed on opposite sides of the outside of a pultruded part have been tried in the past. Various types of mat materials are available but the mat material which is principally used is one in which the fibers are laid in random patterns in a flat layer and the fibers then held together by a binder which acts to attach crossing fibers at the junctions to form a two dimensional structure. This type of mat has high shear resistance due to the large number of interconnections between the randomly oriented fibers. However the main intention of the mat is to provide a high proportion of the fibers extending in the transverse direction and this is not achieved since the fibers extend in random directions. Therefore, only a very small proportion of the total fiber component extends in the transverse direction.

It has long been recognized that the absence of a suitable mat has significantly reduced the quality of pultrusions particularly in regard to the transverse strength, thus leading to limited penetration of pultruded parts into various marketplaces.

The conventional mat has also a number of serious problems which interfere with the efficiencies and economics of the pultrusion process.

First, the mat is a relatively expensive, and there is waste of offal when the mat is slit to width.

Second, the mat is difficult to form into the required complex shapes. Thick, strong mats are available but they are more difficult to bend and shape, before entering the die. Lightweight mats are easier to shape, but they lack transverse strength, and are more prone to ripping-out at the die entrance.

The choice of mat is therefore a compromise between the necessity for bending to shape and the required strength of the pultruded part.

More recently, mats have become available that are needled in a direction at right angles to the plane of the mat, to provide loops that cooperate with the rovings, and also form a mat structure which has greater bond strength in the through-thickness direction, to provide necessary pull strength. This mat has a tendency to stretch, and is very expensive, thus interfering with the economics of the pultrusion process.

Available reinforcing mats use continuous fibers rather than cut-staple fibers in order to provide the highest strength of the fibers. However, the needling tends to break at least some of the pulled glass fibers in order to effect their distortion from the plane of the mat, thus reducing the strength of the broken fibers.

United States Patent 4,058,581 discloses an attempt to attach discontinuous fibers to longitudinally continuous fibers by simply adding these into the bath of resin so that they may be picked up by the longitudinal fibers as they pass through the resin. There is no assertion by the supplier that this leads to a layer of transverse fibers in the part wall and it is believed that any fibers so attached would simply be pulled straight and longitudinal by passage through the die.

United States Patent 5,324,377 discloses a technique to add fibers transverse to the length of the part by extruding those fibers into the outside of the part so that they are carried with the part through the die. Unfortunately this technique has not yet led to significant success so that the requirement for an improved mat has remained largely unfulfilled.

WO 98/53978 discloses a mat adapted to reinforce a polymeric matrix material.

In order for the reinforcing mat to pass through the die with the longitudinal fibers, it is necessary for the mat to have a sufficient longitudinal strength that it does not tear as it is pulled through the die. Furthermore the mat must have a sufficient shear strength so that it does not twist or skew allowing one side edge of the mat to move in advance of the other side edge. If such twisting or skewing occurs, the mat will become distorted in the part and the mat eventually will break down if the distortion goes beyond a certain level thus bringing down the process and requiring a re-start.

The term "shear strength" used herein therefore relates to the resistance of the mat to twisting or skewing in the plane of the mat in a direction such that one edge of the mat moves in advance of the other edge of the mat.

### Summary Of The Invention

It is an important object to provide an improved pultruded product, and especially to provide an reinforcement mat for the resin pultrusion composition in which the mat has high strength to weight characteristics, is flexible for utilization in pultruded parts of complex and varied shape, is economical to manufacture, and that can be used in standard pultrusion processes without significant modification of those procedures.

It is an object of this invention to provide an improvement in the technique of pultrusion by providing an improved mat construction which give increased transverse strength for a particular thickness of mat and resin material content.

The invention is defined by the features of the claims.

The invention provides a mat for use as reinforcement of a resin composition used in forming an elongated pultruded part in which the mat has a pull layer made up of continuous, generally longitudinally-arranged pulling fibers which impart added strength to the mat longitudinally thereof in the pull direction. A reinforcement layer of angular mat fibers is provided in association with the longitudinal pull direction of the mat to provide saffness to the mat. A fibrous batting is provided in association with the pull and reinforcement layers in which at least certain of the fibers of the batting extend through the thickness of the mat layers and interconnect the fibers of the layers to increase the integrity of the mat, especially in a traverse direction. A synthetic resin binder may be provided which becomes sufficiently fluid during pultrusion and heating of the part to diffuse through the layers of the mat and provide an interconnection therebetween upon cooling of the binder.

In a method of preparing a mat for use in reinforcing a pultrusion resin the lay-up of mat layers including the fibrous batting layer is subjected to water-jets from hydro-entangling apparatus or from a series of barbed needles directed into the layered mat, both of which function to deflect the fibers of the batting layer to produce entangling fibers that extend through the thickness of the mat layers and interconnect the fibers of the layers, thus increasing the integrity of the mat during pultrusion of the part.

Preferably, the longitudinally-extending fibers as well as the transverse and oblique fibers of the mat are glass fibers. However, the entangling fibers extending from the batting desirably have a bending resistance less than that of the glass fibers. To this end, the batting is preferably of a cut-staple, synthetic resin material such as a polyester. These fibers therefore can also be used to form the conventionally used veil to keep the glass away from a finished surface of the pultruded product.

In another method of preparing a mat for reinforcing a resin composition used in pultrusion of a part the longitudinal and transverse layers are interconnected by stitching utilizating equipment for that purpose that is generally available and has long been used in the textile industry.

In a method of preparing a mat for reinforcing a resin composition used in pultrusion of a part a series of holes are formed in the mat layers which extend through the thickness of the mat layers and receive binding resin therein for increasing the binding effect of the resin upon hardening of the latter.

In a method of preparing a mat for reinforcing a resin composition used in pultrusion of a part the reinforcing mat for the pultrusion resin is fabricated as a unitary body of indefinite length but which may be readily cut widthwise thereof to any desired width to fit a particular pultruded part.

In accordance with the method of preparing a mat for use as reinforcement of a resin compsotion to be used in forming an elongated pultruded art, in a preferred process, elongated mat layers are placed side-by-side on a supporting surface to present a layer having fibers extending longitudinally of the mat. A mat layer having shorter fibers is brought into association with the elongated mat layers in orientation such that the fibers extend transversely of the mat at an angle of about 90° with respect to the elongated mat fibers. Mat layers are also incorporated in the mat body having oblique fibers which extend at an angle of about ± 45° with respect to the longitudinal length of the elongated fibers. Thus, the fibers of the oblique fiber layer are positioned such that certain of the fibers are located at an oblique angle of about 45° with respect to the longitudinal length of elongated fibers. Other fibers of the oblique fiber layer are located at an angle with respect to the longitudinal length of the elongated fibers in a direction opposite the angularity of the fibers of the first oblique fiber layer referred to above. Use of oblique fibers, one-half of which extend diagonally from one side of the mat to the other, while the other half extend diagonally to the other side of the mat, provide shear stiffness along both sides of the mat.

Desirably, a relatively thin polyester batting layer is brought into association with the longitudinally extending fibers, those at 90° with respect to the longitudinally extending fibers, and the oblique fibers. Hydro-entangling equipment, or a series of relatively closely-packed, barbed penetration needles are employed, to deflect at least certain of the fibers of the batting layer into and through the other layers to interconnect the fibers of the various layers and increase the integrity of the layers of the mat in its final completed form.

A synthetic resin binder may be added as described to the layer of reinforcement fibers which is capable of becoming fluid at the temperature realized in the pultrusion die so that the resin will diffuse throughout the extent of the fibers for binding the fibers together upon cooling and solidification of the binder. Alternatively, certain or all of the fibers may be provided with a synthetic, powder, solvent, thermal or aqueous-based thermoplastic binder sheath which is capable of changing to a sufficiency low viscosity at the temperature within the pultrusion die that it will spread throughout the thickness of the mat, either as a supplement to the added resin binder, or in lieu thereof.

Provision of the reinforcement fibers which extend transversely of the mat at substantially a 90° angle with respect to the pull direction of the mat enhances the reinforcing effect of such fibers in that there is little or no wasted forces in other directions. Although transverse fibers oriented at a 90° angle are preferred, other angularities within the range of 60° to 90° may be accommodated with satisfactory anti-skewing properties, especially if fibers are provided which are disposed in offsetting, opposite angular directions.

### Brief Description Of The Drawings

Figure 1 is a schematic, cross-sectional view through a typical finished pultruded fenestration part;
Fig. 1A is an enlarged, fragmentary detail of a portion of the fenestration component shown in Fig. 1 as outlined by the circular bullet;
Fig. 2 is a further enlarged, fragmentary, essentially schematic detail of a part of the fenestration component as shown in Figs. 1 and 1A;
Fig. 3 is a schematic flow diagram of a pultrusion process and the equipment employed for carrying out the present invention;
Fig. 4 is a schematic, greatly enlarged, fragmentary plan view of a preferred embodiment of a mat in accordance with this invention and useful for reinforcing the resin composition utilized to pultrude a product of the type illustrated in Fig. 1;
Fig. 5 is a fragmentary, cross-sectional view taken substantially along the line 5-5 of Fig. 4;
Fig. 6 is a plan view of a mat;
Fig. 7 is a cross-sectional view taken along the line 7-7 of Fig.6;
Fig. 8 is a fragmentary, cross-sectional view taken substantially along the line 8-8 of Fig. 6;
Fig. 9 is a schematic representation of apparatus for fabricating a mat in accordance with this invention;
Fig. 10 is an enlarged, schematic depiction of a hydro-entangler identified as a water-jet and forming a part of the apparatus shown in Fig. 9;
Fig. 11 is a fragmentary, greatly enlarged, plan view of a mat useful for reinforcing the resin composition utilized to pultrude a product of the type illustrated in Fig. 1;
Fig. 12 is a fragmentary, cross-sectional view along the line 12-12 of Fig. 11;
Fig. 13 is a fragmentary, cross-sectional view along the line 13-13 of Fig. 11;
Fig. 14 is a fragmentary, greatly enlarged, cross-sectional view of a further reinforcing mat;
Fig. 15 is a plan view of a mat;
Fig. 16 is a fragmentary, greatly enlarged, cross-sectional view of another reinforcing mat ;
Fig. 17 is an enlarged, fragmentary, schematic representation of needle apparatus as an alternative for forming a series of holes through the thickness of the mat; and
Fig. 18 is an enlarged, fragmentary view of a representative needle useful in the apparatus of Fig. 9.

In the drawings like characters of reference indicate corresponding parts in the different figures.

### DETAILED DESCRIPTION

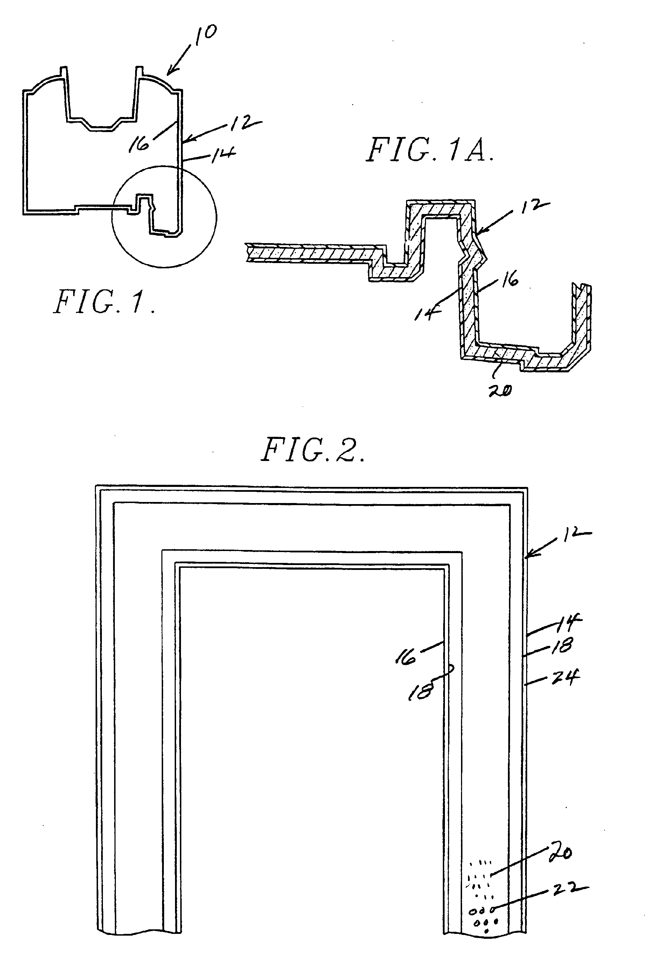

A typical fenestration product which for example may comprise a pultruded part 10 in the form of a window sash rail is shown Fig. 1. It can be seen from this figure that the cross-sectional shape of a part 10 of a fenestration product is of fairly complex configuration which typically has heretofore been difficult to fabricate on a uniform, cost-effective basis because of the inability to reinforce the pultrusion resin with an effective reinforcement materiaL Part 10 as shown comprises a hollow, closed, pultruded body 12 having uniformly spaced outer wall structure 14 and inner wall structure 16. As schematically shown in Fig. 2, wall structures 14 and 16 each include a reinforcement mat 18 on opposite sides of the central resin body 20 having longitudinally-extending glass reinforcing roving 22 therein. A mat is generally applied on the inside and the outside surfaces of a complex shape, as for example illustrated in Fig. 1. The mat applied to the inside and outside surfaces of the part offers a skin to the pultrusion. The skin serves to give the pultrusion wall transverse strength, by delivering transverse oriented glass rovings to the exterior of the laminate. Longitudinally extending rovings function to give the pultruded part longitudinal strength and modulus.

In most cases, it is necessary to provide symmetry of the mat layers to allow the assembly of fibers to pass through the die. One simple example of the shape is shown in Fig. 1 but it will be appreciated that the shape will vary in accordance with requirements and the shape shown is merely intended to be representative of shapes suitable for various end uses. Simple shapes such as rods in most cases do not need the transverse strength of the mat, whereas more complex shapes such as those used for fenestration profiles always use mat on the inside and outside. A relatively thin layer 24 of the resin making up body 20 covers the outer face of each of the reinforcement mats 18.

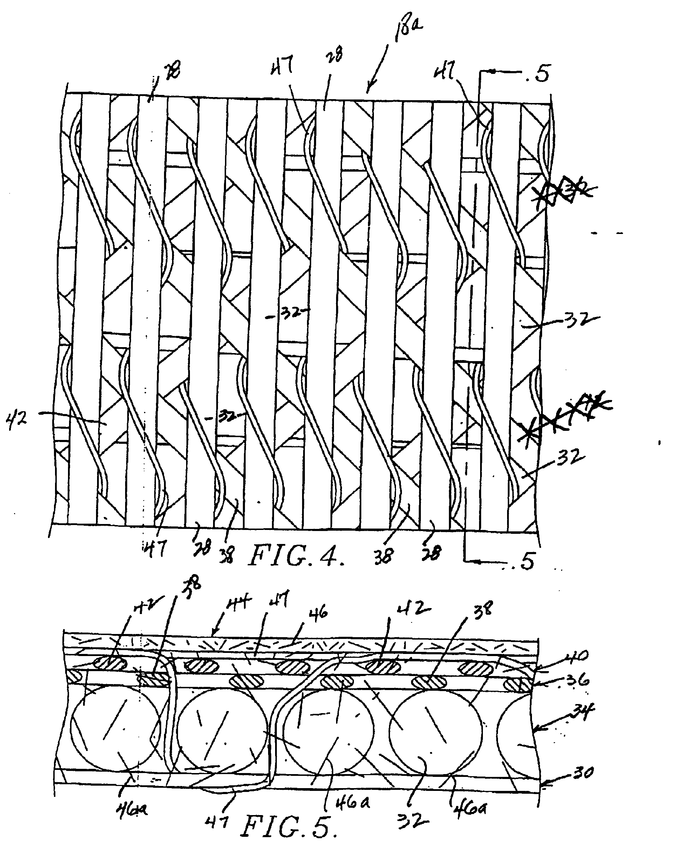

In Figs. 4 and 5, a preferred embodiment 18a of the mat 18 is schematically illustrated in plan view and cross-section, respectively. Mat 18a includes a series of layers of glass fibers 26 which are shown schematically as separate, transversely-spaced, elongated rovings 28 defining a pull layer 30 made up of a large number of relatively fine glass fibers extending longitudinally in the pull direction of mat 18a in what may be characterized as the 0°direction. These rovings should be in the range of 0° ± 20° with respect to the longitudinal length of the mat.

A second set of spaced glass fiber rovings 32 defining a reinforcement layer 34 all extend at an angle of about 90° transversely of mat 18a with respect to the longitudinal axes of rovings 28 making up pull layer 30. The fibers are formed by rovings which extend continuously across the width of the mat 18a and are not cut-staple fibers. Thus, the fibers of the reinforcement layer 34 are substantially wholly laid directly across the width of mat 18a and are defined by rovings laid side-by-side. The 90° orientation of the fibers in transverse rovings 28 maximizes the transverse strength/modulus of the pultruded part 10, thus reducing the amount of fibers that must be provided transversely of the mat 18a. Rovings 32 are desirably positioned in substantially directly side-by-side, slightly spaced relationship to form a blanket of fibers without substantial breaks therebetween. In lieu of the preferred 90° orientation of rovings 32, the rovings may be positioned at other angularities within the range of about 60° up to 90°on the plane of the mat.

Desirably, the individual rovings 32 are substantially larger in cross-sectional size than the cross-sectional dimension of each of the elongated rovings 28, as is evident from the schematic representations of Fig. 5. The transverse reinforcement fibers making up rovings 32 constitute an amount in the range of about 50% to about 90% of the total fiber content in the mat 18a.

An angular roving layer 36 is located outside of layer 30 and comprises a plurality of spaced glass fiber rovings 38 located at an angle of 45° with respect to rovings 28 of reinforcing layer 30. Again, the rovings 38 are of substantially less cross-sectional thickness as compared with the cross-sectional thickness of transverse glass rovings 32.

Another angular roving layer 40 made up of a series of spaced glass fiber rovings 42 is located on the side of transverse layer 34 away from layer 30. The glass fiber rovings 42 are desirably at angle of 45° with respect to rovings 42, but in this instance are oriented oppositely of the orientation of rovings 38. Thus, angularity of rovings 38 may be characterized as + 45° while the angularity of rovings 42 may be characterized as - 45° with respect to the longitudinal axes of rovings 28 of layer 30.

The rovings 38 of layer 36 and rovings 40 of layer 42, extending in opposite directions at 45° angles with respect to rovings 32 of layer 34 extend symmetrically across the width of mat 18a between opposed edges 43 and 45 imparting preferred shear strength to the mat 18a. This increased shear strength is attributable to the fact that rovings 38 of layer 36 and rovings 42 of layer 40 transmit forces substantially equally in the opposite directions to the edge portions 43 and 45 of the mat. By providing such diagonally and oppositely oriented fibers at + 45° and - 45°, there is little tendency for one of the edge portions 43 or 45 to move in advance of the other edge and thus generate a twisting or skewing action which could not be accommodated during pultrusion of part 10. Again, the oblique or diagonal rovings 38 and 42 are continuous and straight across the width of the mat so as to maximize transmission of forces in respective diagonal directions. Alternatively, the rovings may be positioned transversely of the mat in opposite directions within the range of about 30° to about 90°.

Layers 30 and 34 give the mat 18a dimensional stability in the 0° and 45° directions so that the mat 18a can be preformed to shape, yet offer sufficient tracking consistency and necking-resistance for consistent processing during pultrusion. A polyester entanglement batting layer 44 is shown as being located against the outer face of angular roving layer 36, although the batting layer 44 may if desired be placed against the outer face of angular roving layer 40. The batting layer 44 has a series of relatively short fibers 46 randomly oriented in the batting and at least certain of which are intertwined or entangled throughout all three dimensions of the batting. As is most evident from Fig. 5, and as will be explained in greater detail hereinafter, a proportion of the fibers 46 are deflected from the plane of batting 44 and extend as entanglement fibers 46a through the layers 36, 30, 34 and 40 respectively, entangling and interconnecting glass fibers of glass rovings 38 of layer 36, rovings 28 of layer 30, rovings 32 of layer 34, and rovings 42 of layer 40, as illustrated for example schematically in Fig. 5,

The entangling fibers 46a which carry substantially through the thickness of mat 18a function to integrate the layered structure of the mat and prevent the layers from separating or moving relatively one with respect to another as the reinforcement mat is pulled through the pultrusion die, thus providing required temporary longitudinal, transverse and diagonal strength and twisting resistance during the pultrusion process.

The reinforcement mat 18a is made in multiple process steps, beginning with the arrangement of glass rovings 32 in the transverse direction, making up reinforcement layer 34, including the arrangement of the rovings making up angular roving layer 36 and angular roving layer 40, placement of entanglement batting layer 44 against at least one face of the layered composite, which after entanglement serves to hold the mat 18a together during the pultrusion process steps, the consolidation of the fibers, the addition of a binder, and the arrangement and size of holes through the mat 18a.

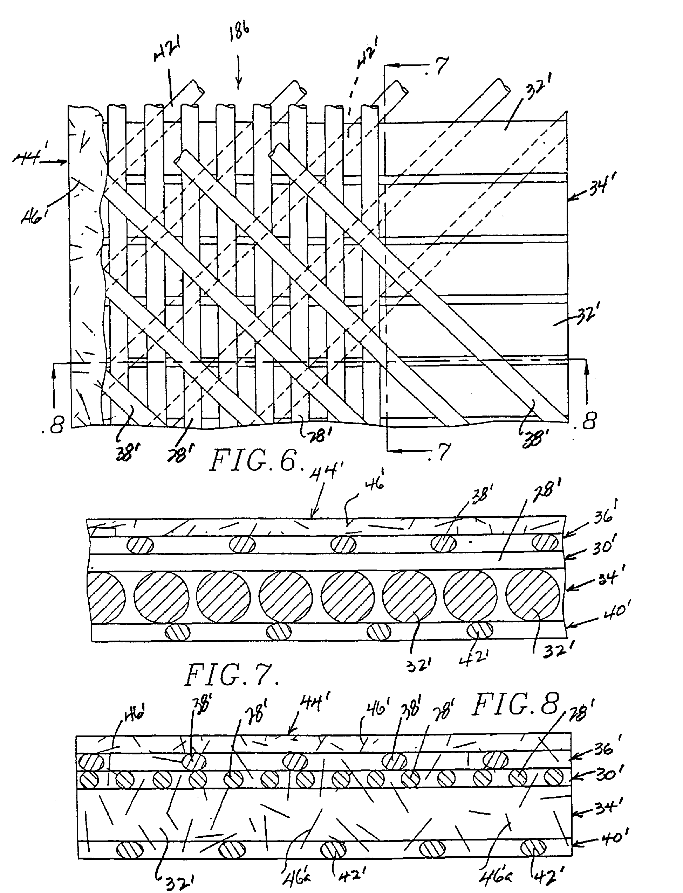

Rovings 32 of reinforcement layer 34 and made up of glass fiber bundles are festooned in the transverse direction (90° with respect to the pull direction of the part 10), generally 2-32 courses per inch to form a web (broadgood). Bundles of glass rovings 28 of less bulk than rovings 32 and comprising the pull layer 30 are laid on at least the top, and optionally on the bottom, of the transverse reinforcement layer 34, in the 0° direction of pull. Smaller reinforcement bundles of glass fibers 38 and 42 are laid in the + 45 ° and - 45° directions on opposite sides of pull layer 30 and reinforcement layer 34, as shown schematically in Figs. 4 and 6.

All of these glass fiber layers (90°, 0°, +/- 45°) are preferably combined into a web by stitching with polyester thread 47 rusing a conventional multi-head stitching machine used in the textile industry.

The batting 44 is preferably a relatively thin web of polyester staple fibers laid down by a conventional air machine. These polyester staple fibers are blended and carded, and a predetermined thickness is achieved by stacking of a plurality of staple-fiber webs. The polyester batting in the form of a web is laid on top of the angular layer 36, or in the alternative, over angular layer 45, or as a further alternative, over both of the layers an 36 and 40.

The batting layer 44 is hydro-entangled with the angular layers 36 and 40, pull layer 30, and transverse reinforcement layer 34 by way of multiple banks of water-jets, that wet the randomly-oriented fibers of the polyester batting web 44 directly to the glass web layers 36, 40, 34, and 30, and force certain of the polyester fibers into locations extending throughout the mat 18a. As shown for example in Figs. 5, 14 and 16, the hydro-entangled fibers act as between-glass bundle spanners, and within-glass bundle spanners, resulting in a somewhat flexible, and continuous mat product. This mat product is calendered to reduce loft, needled to increase permeability, and padded with a PVA or similar binder material, to increase stiffness, and increase the dry-mat stiffness. The calendering, needling, and padding steps can be rearranged, processed multiple times, or omitted if the glass layers are thermally bonded with a resin as explained in detail hereinafter, depending on the desired permeability, stiffness, and thickness required for the mat, to optimize the pultrusion process, and the mechanical properties of the pultruded fenestration product, such as a window frame sill.

The fiberglass for the 90° glass fibers of roving 32 is preferably a 900 yield E-glass roving that has been treated with an organo-silane sizing composition to increase reinforcement-matrix interfacial strength. The +/- 45° oriented glass fibers 38 and 42 and the 0° direction glass fibers 32 are G150's (15000 yards per pound) with a thermoplastic resin sheathing as recommended and supplied by Engineered Yarns Incorporated of Fall River, MA. The polyester material making up batting web 44 preferably consists of a blend a 60% Welman 1.5 denier x 1.5 " polyester staple fiber, and a 40% Kosa 1.5 denier by 1.5" long bicomponent fiber, crimped and baled. The Kosa fiber gives the batting web 44 a heat-fusible component, while the Welman fiber enhances the consistency of the polyester batting and decreases shrink of the web during heat-fusing.

After the blend is mixed, an opener filamentizes the fibers. The fibers are then air laid as a web via the Rando process onto the fiber glass substrate. The web is hydro entangled to the fiber glass substrate, dried, calendered to consolidate and reduce loft, needled to improve permeability, and then chemically treated via a padding operation where a PVAc coating is applied to the mat to improve handling properties.

The preferred material of batting 44 is a polymer such as randomly-oriented, cut-staple polyester fibers in which there are ends of the fibers extending across the width of the mat. The reduced thickness and the cut ends of the polyester mat allow the hydro-entangling jets to grasp the fibers and to carry parts of the fibers across from the plane of the mat into and through the fibrous glass layers to the underlying plate, thus effecting entangling of certain of the fibers of the batting mat with the underlying glass roving layers. The polyester fibers of the batting mat may be grasped by the water-jets at the end of a fiber or at an intermediate location of the fiber. The fibers making up batting 44 should be of characteristics such that the fibers have a relatively low resistance to bending so that fibers may be moved downwardly through hydro-entanglement, or by mechanical structure such as barbed needles or the like. Glass fibers of reduced denier meeting the requisite flexibility requirements may be also used as a batting material for the hydro-entangling layer 44 of mat 18a.

The speed of the reinforcement mat 18a during manufacture of that mat is desirably about 15-25 ft. per minute. A preferred mat width is 20 in., but a wider mat can be fabricated using larger equipment. To create the mat 18a, glass roving supplied as a packaged spool is placed on a creel, and fed onto a set of parallel belts. The glass fibers of roving 32 are wound around needles along each edge of the endless belt, to arrange the glass fibers for the desired orientations. The fibers of longitudinal roving 32 and the fibers making up the roving of angular layers 36 and 40 preferably have been pre-coated with a thermoplastic synthetic resin comprising an amid, a polyester, or a similar reactive resin which will soften and flow at the temperature realized in the die of the pultrusion process. When passed through the pultrusion die, the temperature realized within the die is sufficient to melt the resin and cause the resin to flow and thereby fuse the glass fibers of all of the glass layers of the mat 18a together, thereby producing a windable glass pre-mat. Preferred results have been obtained by using 11 courses per inch of roving 36, making up 90° reinforcement layer 34, about 8 courses per inch of 45° angular, diagonal fibers, and about 8 courses per inch of 0° fibers in an assembled pre-mat for mat 18a.

Meanwhile, the non-woven batting web 44 is made by blending of polyester staple fibers. The staple fibers are blended and opened in a Sigma Fiber Controls non-woven opener. The polyester fibers are then fed through a Rando webber so that a density of approximately 32 gram/square meter is reached. The Rando feed and doff speeds are set at about 2.5 and 1.0 respectively. The polyester non-woven web 44 is then combined with the glass pre-mat as described above.

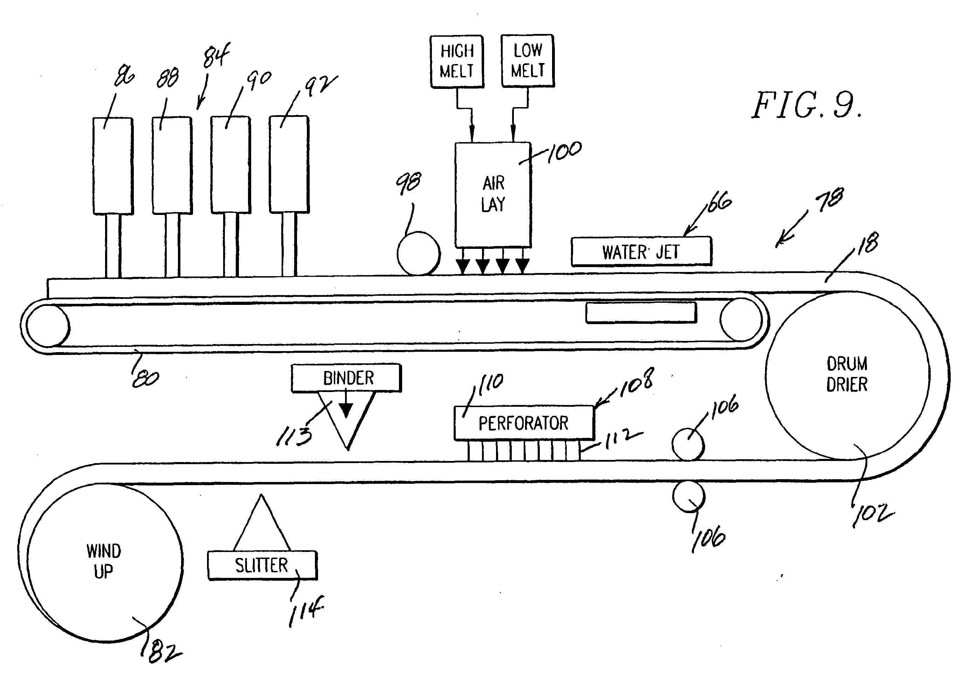

The glass pre-mat with non-woven polyester web applied is fed into a hydro-entangler 66, as for example shown schematically in Fig. 9, on a fine-mesh belt to supplement jet reflections, to help to entangle the mat 18a. A suitable hydro-entangler is commercially available from ICBT Perfojet of Mont Bonnet, France. In general, the hydro-entangler 66 has upper manifold structure 68 receiving water from supply source 70 provided with a plurality of openings or nozzles 72 which direct water jets 74 directly onto mat 18a. The water-jets delivered from nozzles 72 are preferably pulsed so that the jet streams exit through respective nozzles 72 and pass through the thickness of mat 18a until impacting the upper surface of a fine mesh belt 76. The water streams impacting against the upper surface of belt 76 cause the water to dissipate and thereby spread the fibers carried by the jet streams transversely across the top of the plate 76 to enhance entanglement of mat 18a.

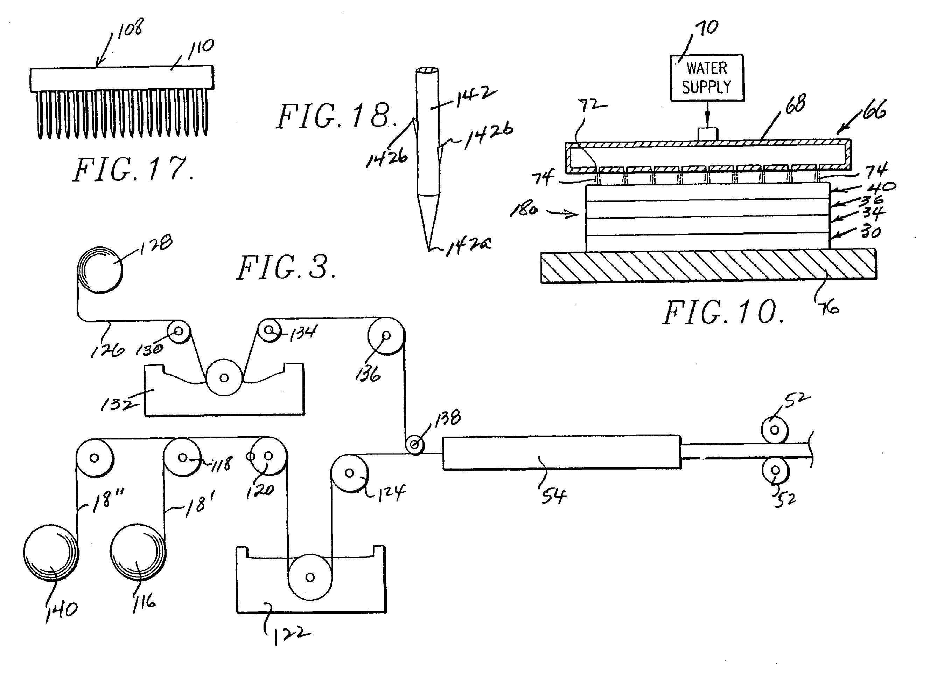

The ICBT Perfojet hydro-entangler has three horizontally-spaced manifolds of the type shown schematically in Fig. 10, each having a row of water-jet nozzles 68, with the nozzles spaced at approximately eight per inch, providing a total of 100 to 150 nozzle openings. The water is jetted onto the mat 18a with the first manifold set at a water pressure of 500 psig, the second at 500 psig, and the third at 1200 psig. The mat 18a becomes entangled with fibers 48 as the water jets from manifold 66 pass through the layered material making up mat 18a. The mat 18a in web form is directed under a vacuum duct, drawing most of the water from the mat. The mat 18a then passes through a 15-foot diameter drum drying oven, such as one available from National Drying ofCary, NC, and that uses 200°F air forced through the thickness of the mat 18a to dry all of the layers thereof.

In lieu of using a hydro-entangler as described, a head (not illustrated) may be provided which supports a series of barbed needles 142 as shown in Fig., 18. In this case, the batting mat layer 44 should be opposite the points 142a of the needles so that when the barbed needle penetrate the mat, the barbs 142b do not engage the fibers 46 of batting mat layer 44. However, upon retraction of the barbed needles 142, the barbs 142b thereon engage certain of the relatively short fibers 46 and pull all or at least a portion of such fibers upwardly into the glass roving layers to entangle the glass fibers with the polyester batting fibers 46.

The mat 18a is then calendered through smooth 12 in. diameter rolls on a B.F. Perkins calender set at 120°C with a minimum gap of 0.007 in., to reduce the mat thickness, and fuse the polyester material into the glass pre-mat. The calendered mat 18a is rolled, and allowed to cool to ambient temperature.

The entangled mat 18a is then unrolled and fed into a Dilo needler with a needle board using #16 needles spaced six-rows deep. The Dilo needler uses barbless needles to achieve a 10 x 10 holes-per-inch density. The punch depth is 14 mm, take off gear is set at 7, the base gear at 1.75, resulting in a stroke rate of 300 per minute, at a 1 meter/minute advance rate. During needling, the needles are heated to 160° F, by use of electric heat guns placed inside the Dilo needle box area, and blowing air through the length of the needle board.

The mat is next fed into an A. G. Mathis padder to apply a 2:5 solution of Franklin Duracet 600 PVAc, diluted with tap water. The mat picks up this binder, and is then squeezed through the rubber drying rolls set at 30 psi, at the given speed per the needling process. The mat passes through another identical National Drying of Cary, NC,15-foot diameter drum drying oven that uses 200°F air forced through the thickness to dry the mat.

The mat is then slit longitudinally to the desired width for pultrusion, and fed into the pultrusion machine with resin-saturated glass rovings.

Equipment for pultruding a part 10 using a mat 18 as an outer skin reinforcement on one or both sides of the part is illustrated schematically in Fig. 3. Pulling mechanism 52, which for example may comprise roller structure, is operable to pull part 10 from a pultrusion die 54 of the transverse configuration of the part to be produced.

A mat 18' prepared in accordance with this invention as previously described may be directed from a source roll 116 over schematically illustrated roller 118 and 120, thence through resin bath 122, over roller 124 and into the pultrusion die 54. A web 126 of glass roving from source roll 128 passes over roller 130, through resin bath 132, and then over rollers 134, 136 and 138 into the die 54. Mat 18" is supplied from source roll 140 and across rollers 118 and 120 into bath 122 and across roller 124 into die 54. A conventional pultrusion resin formulation may be used for pultruding part 10 with a typical formula which, for example, may include a mixture of polyester and styrene resins, along with a hardener, a catalyst, a calcium compound filler, a suitable surface modifier, and a die lubricant.

It is understood that the representation in Fig. 3 is schematic only and intended to indicate that mats 18' and 18" and the longitudinally-extending rovings 126 are located such that mat 18' is one skin layer of the pultruded part, glass rovings 126 are centrally disposed of the part, and mat 18" is positioned as an opposite skin layer of the part. Furthermore, instead of passing the roving and the batting mat through respective resin baths, as shown schematically in Fig. 3, resin may be applied to the roving and the batting using conventional resin-applying procedures that are well known to those skilled in this art.

An adhesive binding material such as PVA in a water carrier and containing about 20% to about 60% solids, corn starch or other adhesive material well known to one skilled in the art can be used to assist in interconnecting the structure so that the entangled fibers are bonded to the fibers of the layers 30, 34, 36 and 40 and the fibers are bonded to each other. Generally, the binding agent is present in an amount in the range of 2% to 20% by weight (dry weight without water). However, the amount of binding agent is significantly reduced relative to conventional non-woven mats and thus the stiffness of the structure is very much reduced and therefore improved, allowing the reinforcement mat to bend to take up the complex shape of the part to be formed while restricting shear.

If thermoplastic fibers are used for entangling, the binder can be reduced or even omitted and instead the fibers heated to provide some amount of heat bonding to each other and to the glass or main fibers. In the arrangement shown in Fig. 9, some of the entangling fibers are of a high melting point so that they remain intact and thus act as entangling fibers, and some are of a lower melting point so that they act as bonding fibers.

The mat 18 as described provides reinforcement which has sufficient structural strength in the longitudinal and shear directions to ensure that it will be transported through the pultrusion die without significant longitudinal deformation. This is attributable to the fact that the main bulk of the fibers are arranged in the transverse direction to provide the finished product with the required transverse strength. The number of fibers therefore necessary for a predetermined transverse strength is significantly reduced since the bulk of the fibers are arranged in the direction to maximize the strength provided by each fiber.

Referring specifically to Fig. 9, apparatus 78 includes a conveyor belt 80 arranged to carry the components of the mat 18 from an initial supply to a wind-up device 82. The components of the mat 18 are laid onto the belt in required sequence from a supply thereof which includes a plurality of supply units generally indicated by the numeral 84.

Diagonal roving supply head 86 functions to lay down glass fiber rovings 42 at an angle with respect to the longitudinal length of belt 60 and preferably at an angle of about 45°. The head 86 traverses back and forth across belt 60 in timed relationship to the speed of the belt 60 to provide diagonally-oriented glass rovings. Glass fiber rovings supply head 88 is operable to reciprocate back and forth across the width of belt 60 to lay down transverse glass fiber rovings 32, again in timed relationship to movement of belt 60, to provide rovings which are at a 90° angle with respect to the path of travel of belt 60. Supply head 90 continuously lays down glass rovings 28 along the longitudinal length of belt 60, thus providing a 0° lay of rovings.

Diagonal roving supply head 92 lays down a glass fiber rovings 38 on the previously-applied rovings, at a 45° angle opposite the angularity of rovings 42. Thus, the rovings 38 may be characterized as + 45° and the rovings 42 characterized as - 45° with respect to the longitudinal length of the rovings laid down on belt 60 and thereby with respect to rovings 28.

The mat structure so formed is passed through a set of hot rolls 98 which act to elevate the temperature of the materials previously laid down on belt 60 so that when glass rovings are used that have a polymer sheath thereon as described above, the polymers decrease sufficiently in viscosity at the operating temperature of the apparatus 78 to flow through and assist in bonding of the layers of the mat one to another upon solidification in the final product. The rolls 98 act also to calender the mat so that it is compressed and slightly reduced in thickness. In some cases the heat may be omitted and simple calendering action be used.

When the glass fiber pre-mat so formed is consolidated by the bonding action, an air lay machine 100 receives cut-staple fibers of a suitable polymer such as polyester from a source thereof which may include a proportion of high melt fibers that withstand a temperature of about 350°F, and a remainder of low melt fibers which melt at about 270°F. These fibers are blended and laid by the air lay machine onto the top surface of the mat previously formed. The details, construction and operation of equipment for air laying of staple fibers is well known to those skilled in the applicable art.

After the staple fibers are laid onto the mat, the collated structure is passed through the water-jet hydro-entangler 66 shown in Fig. 9 and described above. The belt 60 terminates after the entangler and the collated and combined mat is laid onto a drum dryer 102 which extracts the water previously applied in the water-jet entangler as the mat structure passes around the periphery of the drum dryer.

Downstream of the dryer 102, the mat again passes between a pair of hot rolls 106 which act to further calender the mat and also to melt and activate the polyester fibers to provide a bonding action. A needler or perforator 108 has a head 110 which supports a plurality of parallel, relatively closely-spaced needles 112 (Fig. 17) located downstream of the hot rolls 106. The head 110 is reciprocated to sequentially direct the needles 112 through the mat to form an array of perforations. The array includes perforations spaced both longitudinal and transversely so the series of needles across the width of the mat are punched through the mat as the mat moves forwardly to provide the required number of spaced perforations thus increasing the porous nature of the mat to allow penetration of resin to bond through the mat into the various components of the mat. From 1 to 5000 holes per square inch may be formed in the mat using perforator 108, but about 80 holes per square inch formed by #14 needle size is preferred in a rectangular grid pattern. The needler 108 may be of conventional design which functions at a rate of approximately 20 cycles or reciprocations per second. The holes may be round or polygonal and generally are of a diameter what may be characterized as pin holes. The hole pattern may be random, square, rectangular, close-packed-hexagonal, or similar configurations.

A PVA binder, or an equivalent powdered, solvent, thermal or aqueous based thermoplastic binder is applied to the mat 18 by dispenser 113.

Following perforation of the mat and application of the binder, it is slit by slitter 114 into a plurality of tapes or bands of the required width for use in the subsequent pultrusion process. Each band is then packaged in a suitable manner for example by winding onto a roll so the roll can be transferred to the supply section of the pultrusion process as described hereinbefore.

The mat formation may also be carried out on-line with the pultrusion process so as to avoid the winding and supply steps although in general this is unlikely to be practical in many circumstances due to the different speeds of the processing lines.

The transverse speed at which supply heads 86 and 92 lay down the diagonally-oriented glass rovings 42 and 38 may be adjusted with respect to the velocity of belt 60 to vary the angularity of the glass rovings across the width of the mat on belt 60 from the preferred angularity of about +/- 45° to angles within the range of about +/- 20° to about 70°, and desirably about +/- 30° to 60° with respect to the longitudinal length of the mat.

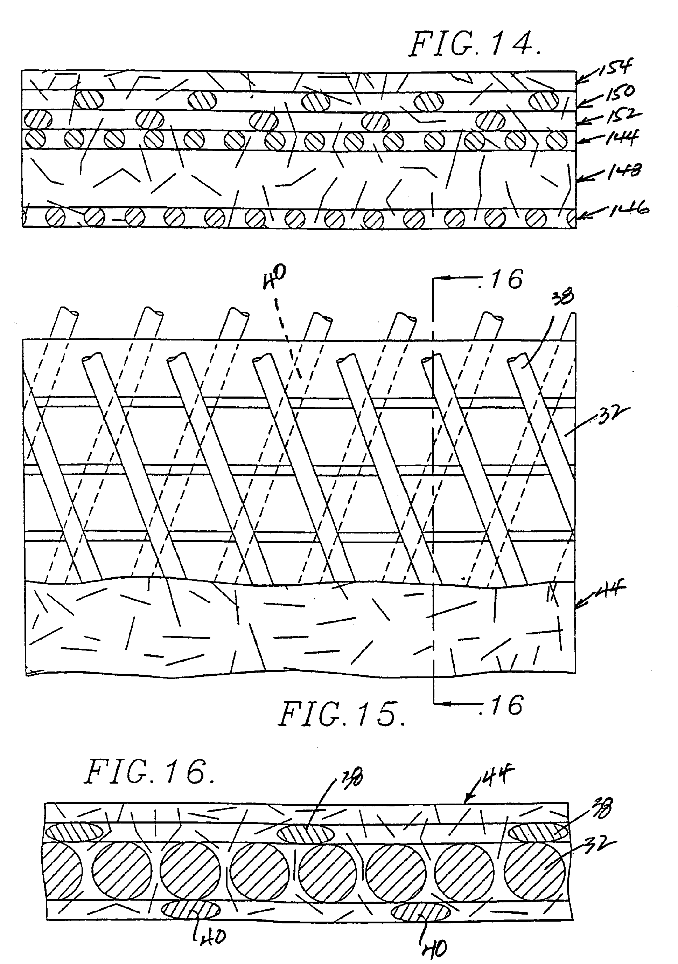

When diagonal glass rovings 38 and 42 are laid down at 70° angles with respect to the longitudinal length of the mat, as shown in Fig. 15, in many instances the longitudinal rovings 28 may be omitted in that the diagonal rovings provide adequate dimensional stability in the direction of pull to prevent canting, or distortion of the reinforcing mat 18b while passing through pultrusion die 52.

In another alternate embodiment of this invention, the diagonal glass rovings 38 and 42 may be replaced with additional quantities of the transverse glass rovings 32 making up reinforcement layer 34 so that the resultant strength of the fibers in the finished pultruded part lies primarily or generally in the transverse direction.

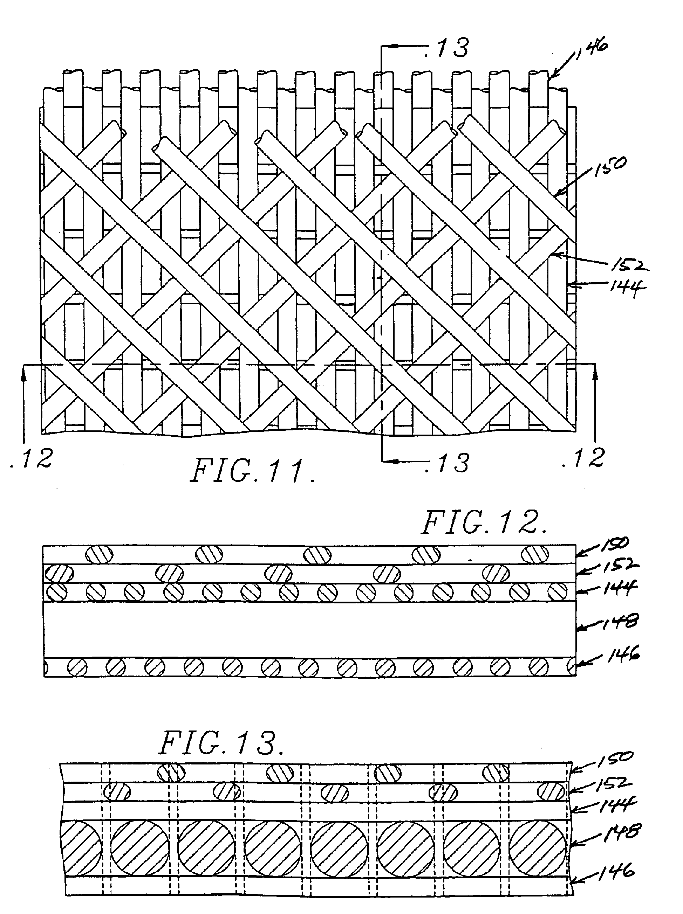

In the alternate embodiment of the pre-mat before the addition of the batting layer as depicted in Figs. 11-13, two longitudinally-extending glass fiber roving layers 144 and 146 are provided on opposite sides of centrally-located, substantially larger glass fiber rovings in transverse layer 148. Two oppositely-diagonal glass fiber roving layers 150 and 152 are positioned against the face of longitudinal layer 144 opposite transverse layer 148. The glass fiber roving layers 150 and 152 are preferably oriented in opposite diagonal directions at about 45° with respect to the longitudinal length of the mat.

Figure 14 illustrates another embodiment similar to the Fig. 12 embodiment except in this instance, a batting mat layer 154 is positioned on top of the diagonal glass fiber roving layer 150. In this figure, relatively short fibers of the batting mat layer are schematically shown as being entangled with the glass fiber layers 144-152, inclusive.

### EXAMPLE 1-Thermally Bonded (not according to the invention as claimed)

The mat, in a resin matrix, provides the high transverse strength on the surface of the exterior or interior of a pultruded part such as a sash stile or rail, or a pultruded frame head, sill, or jamb, or other products outside the fenestration industry. The cross-section of the pultrusion profile consists of a matrix of thermosetting resin with longitudinal- and/or other-rovings in the middle of the profile thickness, and the mat on the outside surfaces (interior surface in the case of a hollow profile). The mat portion of the laminate is about 0.010" thick, the longitudinal-roving area is about 0.030" thick, and the opposite mat is also about 0.010" thick. The longitudinal-roving-fibers are oriented in the 0° direction. These longitudinal-fibers are mostly 675-yield (yards per pound) fiberglass rovings.

A construction of a reinforcement mat, with the longitudinal direction (e.g. the continuous direction) designated as the 0-0° direction in the plane of the mat, comprised of:
a first layer of a plurality of 1800-yield fiberglass fibers rovings, substantially in the transverse, or 90° direction in the plane of the mat set at 10 courses per inch;
a second layer of a plurality of an amide, polyester or reactive sheathed fiber glass bundles spaced 4 per inch, in the +/- 45° direction in the plane of the mat, thermally bonded to the transverse fiberglass;
a third layer of a plurality of an amide, polyester or reactive sheathed fiber glass bundles spaced 4 per inch, in the 0° direction in the plane of the mat, thermally bonded to the transverse fiberglass;
a fourth layer of a plurality of polyester fibers that have at least portions thereof which extend in the thickness direction through the third, second and/or first layer to effect a connection there-between, with a pre-entangled weight of 32 grams per square meter;
with holes primarily between the transverse 1800-yield roving, like sieve-holes in the through-thickness direction, with the holes numbering eighty per square-inch in a rectangular grid pattern;
with a PVA-based binder to adhere the multiple layers and/or the interstices within a given layer;
with the entire mat thickness (slightly compressed during thickness measurement) at approximately 0.010-inches;
and a back-side with alternately-spaced 0° fibers as a third layer of a plurality of an amide, polyester or reactive sheathed fiber glass bundles spaced 4 per inch, in the 0° direction in the plane of the mat, thermally bonded to the transverse fiberglass.

### EXAMPLE 2--Polyester Stitched

The mat, in a resin matrix, provides the high transverse strength on the surface of the exterior or interior of a pultruded sash stile or rail, or a pultruded frame head, sill, or jamb. The cross-section of the pultrusion profile consists of a matrix of thermosetting resin with longitudinal- and/or other-rovings in the middle of the profile thickness, and the mat on the outside surfaces (interior surface in the case of a hollow profile). The mat portion of the laminate is about 0.010" thick, the longitudinal-roving area is about 0.030" thick, and the opposite mat is also about 0.010" thick. The longitudinal-roving-fibers are oriented in the 0° direction. These longitudinal-fibers are mostly 675-yield (yards per pound) fiberglass rovings. A construction of a reinforcement mat, with the longitudinal direction (e.g. the continuous direction) designated as the 0° direction in the plane of the mat, comprised of:
a first layer of a plurality of 1800-yield fiberglass fibers rovings, substantially in the transverse, or 90° direction in the plane of the mat set at 10 courses per inch;
a second layer of a plurality of 6-denier polyester thread spaced 6 per inch, in the +45° direction in the plane of the mat, stitched to the transverse fiberglass;
a third layer of a plurality of a 6-denier polyester thread spaced 6 per inch, in the 0° direction in the plane of the mat, stitched to the transverse fiberglass;
a fourth layer of a plurality of 6-denier fibers that have at least portions thereof which extend in the thickness direction through the third, second and/or first layer to effect a connection there-between, with a pre-entangled weight of 32 grams per square meter;
with holes primarily between the transverse 1800-yield roving, like sieve-holes in the through-thickness direction, with the holes numbering eighty per square-inch in a rectangular grid pattern;
with a PVA-based binder to adhere the multiple layers and/or the interstices within a given layer;
with the entire mat thickness (slightly compressed during thickness measurement) at approximately 0.010-inches;
and a back-side with alternately-spaced 0° fibers as a third layer of a plurality of a 6-denier polyester thread spaced 6 per inch, in the 0° direction in the plane of the mat, and stitched to the transverse fiberglass.

### EXAMPLE 3--Fiberglass Stitched

The mat, in a resin matrix, provides the high transverse strength on the surface of the exterior or interior of a pultruded sash stile or rail, or a pultruded frame head, sill, or jamb. The cross-section of the pultrusion profile consists of a matrix of thermosetting resin with longitudinal- and/or other-rovings in the middle of the profile thickness, and the mat on the outside surfaces (interior surface in the case of a hollow profile). The mat portion of the laminate is about 0.010" thick, the longitudinal-roving area is about 0.030" thick, and the opposite mat is also about 0.010" thick. The longitudinal-roving-fibers are oriented in the 0° direction. These longitudinal-fibers are mostly 675-yield (yards per pound) fiberglass rovings.

A construction of a reinforcement mat, with the longitudinal direction (e.g. the continuous direction) designated as the 0° direction in the plane of the mat, comprised of:
a first layer of a plurality of 1800-yield fiberglass fibers rovings, substantially in the transverse, or 90° direction in the plane of the mat set at 10 courses per inch;
a second layer of a plurality of fiberglass fiber bundles spaced 4 per inch, in the +45° direction in the plane of the mat, stitched to the transverse fiberglass;
a third layer of a plurality of a 6-denier polyester thread spaced 4 per inch, in the 0° direction in the plane of the mat, stitched to the transverse fiberglass;
a fourth layer of a plurality of polyester fibers that have at least portions thereof which extend in the thickness direction through the third, second and/or first layer to effect a connection there-between, with a pre-entangled weight of 32 grams per square meter;
with holes primarily between the transverse 1800-yield roving, like sieve-holes in the through-thickness direction, with the holes numbering eighty per square-inch in a rectangular grid pattern;
with a PVA-based binder to adhere the multiple layers and/or the interstices within a given layer;
with the entire mat thickness (slightly compressed during thickness measurement) at approximately 0.010-inches;
and a back-side with alternately-spaced 0° fibers as a third layer of a plurality of a fiberglass bundles spaced 4 per inch, in the 0° direction in the plane of the mat, and stitched to the transverse fiberglass.

Since various modifications can be made in our invention as herein above described, and many apparently widely different embodiments of same made within the scope of the claims without departing from such scope, it is intended that all matter contained in the accompanying specification shall be interpreted as illustrative only and not in a limiting sense.

## Claims

1. A mat for use as reinforcement for a resin composition to be used in forming an elongated, pultruded part of constant transverse cross-section using a pultrusion die, said mat comprising:
a pull layer (30) of continuous, generally longitudinally-arranged pulling fibers (28) to provide strength to the mat longitudinally thereof in the pull direction of the mat during pultrusion of the part;
a reinforcement layer (34) of angular mat fibers (32) in association with the pulling fiber layer (30) and oriented in a direction at an angle with respect to the longitudinal pull direction of the mat to provide stiffness to the mat during pultrusion of the part;
lines of stitching (47) interconnecting the pull layer (30) and the reinforcement layer (34) to provide the mat; and
relatively short entangling fibers (46a), at least a portion of which extend through the thickness of the mat layers and interconnect the fibers of the layers to increase the integrity of the mat during pultrusion of the part and curing of the resin composition.

2. The reinforcement mat according to claim 1, wherein the mat further includes elongated diagonal fibers (38, 42) extending diagonally across substantially the full transverse width of the mat and at an angle with respect to the fibers of the reinforcement layer (34).

3. The reinforcement mat according to claim 1, wherein the lines of stitching extend in the longitudinal pull direction of the mat.

4. The reinforcement mat according to claim 1, wherein the mat further includes first and second elongated diagonal fibers (38, 42) extending diagonally across substantially the full transverse width of the mat with the first diagonal fibers oriented at an angle opposite the angularity of the second diagonal fibers.

5. The reinforcement mat according to any preceding claim, wherein the mat includes a binder interconnecting the fibers of the reinforcement layer (34) and the other fibers of the mat.

6. The reinforcement mat according to any preceding claim, wherein at least a portion of the entangling fibers are hydro-entangled fibers.

7. The reinforcement mat according to any preceding claim, wherein the entangling fibers have a bending resistance less than that of the fibers of the reinforcement layer (34).

8. The reinforcement mat according to any preceding claim, wherein at least some of the entangling fibers are heat bonded to the fibers of the reinforcement layer (34).

9. The reinforcement mat according to any preceding claim, wherein the fibers of the reinforcement layer (34) extend substantially across the full transverse width of the mat.

10. The reinforcement mat according to any preceding claim, wherein the fibers of the reinforcement layer (34) are oriented at an angle of about 90° with respect to the longitudinal pull direction of the part.

11. The reinforcement mat according to any preceding claim, wherein the fibers of the reinforcement layer (34) are of glass and the entangling fibers are of polyester.

12. The reinforcement mat as set forth according to any preceding claim, wherein there is provided a series of spaced holes through the thickness of the mat.

13. The reinforcement mat according to claim 12, wherein the series of holes through the thickness of the mat are punched holes.

14. An elongated pultruded part formed by using the reinforcement mat of any of the preceding claims.

## Patentansprüche

1. Matte zur Verwendung als Verstärkung für eine Harzzusammensetzung, die bei der Bildung eines länglichen, pultrudierten Teils mit konstantem transversalen Querschnitt mittels einer Pultrusionsdüse verwendet werden soll, wobei die Matte aufweist:
eine Zuglage (30) aus durchgehenden, im wesentlichen longitudinal angeordneten Zugfasern (28), um der Matte longitudinal zu ihr in der Zugrichtung der Matte während der Pultrusion des Teils Festigkeit zu verleihen;
eine Verstärkungslage (34) aus winkeligen Mattenfasern (32) in Verbindung mit der Zugfaserlage (30), die in eine Richtung unter einem Winkel bezüglich der longitudinalen Zugrichtung der Matte orientiert sind, um der Matte während der Pultrusion des Teils Steifigkeit zu verleihen;
Nahtlinien (47) zum Verbinden der Zuglage (30) und der Verstärkungslage (34), um die Matte bereitzustellen; und
verhältnismäßig kurze Verfilzungsfasern (46a), von denen sich mindestens ein Anteil durch die Dicke der Mattenlagen erstreckt und die Fasern der Lagen miteinander verbindet, um die Integrität der Matte während der Pultrusion des Teils und dem Aushärten der Harzzusammensetzung zu erhöhen.

2. Verstärkungsmatte nach Anspruch 1, wobei die Matte ferner längliche Diagonalfasern (38, 42) aufweist, die sich diagonal über im Wesentlichen die gesamte transversale Breite der Matte und unter einem Winkel bezüglich der Fasern der Verstärkungslage (34) erstrecken.

3. Verstärkungsmatte nach Anspruch 1, wobei sich die Nahtlinien in die longitudinale Zugrichtung der Matte erstrecken.

4. Verstärkungsmatte nach Anspruch 1, wobei die Matte ferner erste und zweite längliche Diagonalfasern (38, 42) aufweist, die sich diagonal über im Wesentlichen die gesamte transversale Breite der Matte erstrecken, wobei sich die ersten Diagonalfasern unter einem Winkel orientiert sind, der zur Winkeligkeit der zweiten Diagonalfasern entgegengesetzt ist.

5. Verstärkungsmatte nach einem der vorhergehenden Ansprüche, wobei die Matte einen Binder aufweist, der die Fasern der Verstärkungslage (34) und die anderen Fasern der Matte gegenseitig verbindet.

6. Verstärkungsmatte nach einem der vorhergehenden Ansprüche, wobei mindestens ein Anteil der Verfilzungsfasern hydroverfilzte Fasern sind.

7. Verstärkungsmatte nach einem der vorhergehenden Ansprüche, wobei die Verfilzungsfasern eine kleinere Biegefestigkeit als die Fasern der Verstärkungslage (34) aufweisen.

8. Verstärkungsmatte nach einem der vorhergehenden Ansprüche, wobei mindestens einige Verfilzungsfasern an die Fasern der Verstärkungslage (34) wärmegeklebt sind.

9. Verstärkungsmatte nach einem der vorhergehenden Ansprüche, wobei sich die Fasern der Verstärkungslage (34) im Wesentlichen über die gesamte transversale Breite der Matte erstrecken.

10. Verstärkungsmatte nach einem der vorhergehenden Ansprüche, wobei die Fasern der Verstärkungslage (34) unter einem Winkel von etwa 90° bezüglich der longitudinalen Zugrichtung des Teils orientiert sind.

11. Verstärkungsmatte nach einem der vorhergehenden Ansprüche, wobei die Fasern der Verstärkungslage (34) aus Glas bestehen und die Verfilzungsfasern aus Polyester bestehen.

12. Verstärkungsmatte nach einem der vorhergehenden Ansprüche, wobei eine Reihe von beabstandeten Löchern durch die Dicke der Matte vorgesehen ist.

13. Verstärkungsmatte nach Anspruch 12, wobei die Reihe der Löcher durch die Dicke der Matte aus gestanzten Löchern besteht.

14. Längliches pultrudiertes Teil, das mittels der Verstärkungsmatte nach einem der vorhergehenden Ansprüche gebildet wird.

## Revendications

1. Natte utilisée pour renforcer un composite en résine destiné à former une pièce étirée pultrudée à section transversale constante au moyen d'un moule de pultrusion, ladite natte comprenant :
une couche de traction (3a) de fibres de traction (28) généralement disposée dans la direction longitudinale pour obtenir une résistance longitudinale de la natte, dans le sens de traction de la natte lors de la pultrusion de la pièce ;
une couche de renforcement (34) de fibres de natte (32) angulaires associée à la couche de fibres de traction (3a) et orientée dans une direction formant un angle avec la direction longitudinale de traction de la natte, pour obtenir une rigidité de la natte lors de la pultrusion de la pièce ;
des lignes de couture (47) raccordant la couche de traction et la couche de renforcement (34) pour obtenir la natte ;
des fibres d'emmêlement (46a) relativement courtes, au moins une partie de celles-ci s'étendant au travers de l'épaisseur des couches de natte et raccordant les fibres des couches afin d'améliorer l'homogénéité de la natte lors de la pultrusion de la pièce et du durcissement du composite en résine.

2. Natte de renforcement selon la revendication 1, où ladite natte comprend en outre des fibres diagonales étirées (38, 42) s'étendant diagonalement sensiblement sur toute la largeur transversale de la natte en formant un angle avec les fibres de la couche de renforcement (34).

3. Natte de renforcement selon la revendication 1, où les lignes de couture s'étendent dans la direction longitudinale de traction de la natte.

4. Natte de renforcement selon la revendication 1, où ladite natte comprend en outre de premières et de deuxièmes fibres diagonales étirées (38, 42) s'étendant diagonalement sensiblement sur toute la largeur transversale de la natte, les premières fibres diagonales étant orientées suivant un angle opposé à celui des deuxièmes fibres diagonales.

5. Natte de renforcement selon l'une des revendications précédentes, où ladite natte comprend un liant raccordant les fibres de la couche de renforcement (34) et les autres fibres de la natte.

6. Natte de renforcement selon l'une des revendications précédentes, où au moins une partie des fibres d'emmêlement sont des fibres hydro-emmêlées.

7. Natte de renforcement selon l'une des revendications précédentes, où les fibres d'emmêlement présentent une résistance au pliage inférieure à celle des fibres de la couche de renforcement (34).

8. Natte de renforcement selon l'une des revendications précédentes, où au moins quelques fibres d'emmêlement sont liées thermiquement aux fibres de la couche de renforcement (34).

9. Natte de renforcement selon l'une des revendications précédentes, où les fibres de la couche de renforcement (34) s'étendent sensiblement sur toute la largeur transversale de la natte.

10. Natte de renforcement selon l'une des revendications précédentes, où les fibres de la couche de renforcement (34) sont orientées suivant un angle de 90° par rapport à la direction longitudinale de traction de la natte.

11. Natte de renforcement selon l'une des revendications précédentes, où les fibres de la couche de renforcement (34) sont en verre et les fibres d'emmêlement en polyester.

12. Natte de renforcement selon l'une des revendications précédentes, où une série de trous espacés est prévues dans l'épaisseur de la natte.

13. Natte de renforcement selon la revendication 12, où la série de trous dans l'épaisseur de la natte est constituée de trous poinçonnés.

14. Pièce étirée pultrudée formée en recourant à la natte de renforcement selon l'une des revendications précédentes.
